# EUROPEAN PATENT SPECIFICATION

(11) **EP 0 711 676 B1**
(45) Date of publication and mention of the grant of the patent: **12.01.2000**
(21) Application number: 95308036.3
(22) Date of filing: 09.11.1995
(51) Int. Cl.: B60C 11/04, B60C 11/11

(54) **Pneumatic tyre having a tread strip comprising a plurality of tread ribs**
Luftreifen mit einer Lauffläche, welche eine Vielzahl von Rippen enthält
Bandage pneumatique comportant un profil formé d'une pluralité de nervures

(30) Priority: 11.11.1994 DE 4440396; 23.02.1995 DE 19506382
(43) Date of publication of application: 15.05.1996
(73) Proprietor: Dunlop GmbH, 63450 Hanau (DE)
(72) Inventor: Gerresheim, Manfred, D-63179 Oberthausen/Hausen (DE); Löwenhaupt, Bernd, D-64625 Benshaim (DE); Zesny, Günther, D-63639 Flörsbach (DE); Winter, Hans-Joachim, D-63571 Gelnhausen (DE); Lang, Werner, D-63457 Hanau/Main (DE); Becker, Peter, D-64546 Mörfelden/Walldorf (DE); Steinbrecht, Ulrich, D-64372 Ober-Ramstadt (DE)
(74) Representative: Stewart, Charles Geoffrey

(56) References cited:
- EP-A- 0 325 552
- DE-A- 2 711 066
- FR-A- 2 495 064
- PATENT ABSTRACTS OF JAPAN vol. 950 no. 005 & JP-A-07 117416 (SUMITOMO RUBBER IND LTD) 9 May 1995,
- PATENT ABSTRACTS OF JAPAN vol. 012 no. 041 (M-666) ,6 February 1988 & JP-A-62 194909 (BRIDGESTONE CORP) 27 August 1987,
- PATENT ABSTRACTS OF JAPAN vol. 017 no. 064 (M-1364) ,8 February 1993 & JP-A-04 271906 (BRIDGESTONE CORP) 28 September 1992,

## Description

The invention relates to a pneumatic tyre having a tread strip which is built up from a plurality of tread bands or ribs separated in the axial direction by broad circumferential grooves.

A pneumatic tyre having a tread strip which is built up from three individual tread ribs is already known from DE 36 43 046 A1. The outer tread ribs of this tyre have, amongst other things the task of partitioning off from the outside the rolling noises which are generated between the road surface and the tread strip, and thus of keeping the noise emission of the tyre low. For this purpose the outer tread ribs have no grooves or other negative tread pattern elements. This has the consequence, on the one hand, that the outer tread ribs show a particularly pronounced partitioning action and means, on the other hand, that the self-generation of noise in the outer tread ribs can be kept low.

The wet behaviour of a tyre of this kind can, however, be problematic in practice because the water drainage in the tread strip region must be coped with the circumferential grooves alone.

A tyre having a plurality of tread ribs defined by wide circumferential grooves and having narrower grooves in the outer ribs according to the preamble of claim 1 is known from EP-A-0325552. However in this known tyre the narrow outer grooves are continuous and connected to both the wide circumferential grooves and the tread shoulder by axially extending grooves which allow passage of tread generated noise to the outside.

The present invention is based on the object of so further developing a noise reducing pneumatic tyre of the initially described kind that the tyre has an improved wet behaviour with still a low total noise emission.

As a solution of this object the invention provides a pneumatic tyre having a tread strip comprising a plurality of tread ribs separated in the axial direction by wide circumferential grooves, wherein outer rib grooves are present in at least one of the outer tread ribs, with the outer rib grooves having a width smaller than that of the circumferential grooves, characterised in that the outer rib grooves are circumferentially discontinuous and communicate directly with the circumferential groove bounding the corresponding outer tread rib and the outer rib grooves have an alternating configuration such that they are present in different outer ribs over the entire tread strip circumference and in that the outer rib grooves are partitioned off from the outer edges of the tread by a groove-free, outer rib margin extending continuously around the circumference.

The outer rib grooves enable the further conduction of water and water drainage in the region of the outer tread ribs and thus contribute to an improved overall wet behaviour of the tyre, without thereby substantially increasing the running noises of the tyre. In this connection drainage of the water which has collected in the outer rib grooves is made possible into the relatively broad circumferential grooves, through the points of connection between the circumferential grooves and the outer tread rib grooves, and this favourably influences the drainage action of the outer rib grooves in the region of the outer tread ribs.

The outer rib grooves are preferably predominantly formed of groove sections which extend substantially in the circumferential direction, which results in good noise insulation again being achieved in the axial direction.

It is however preferred that the outer rib grooves in the outer tread ribs occur relatively individually in such a way that a cross-section through an outer tread rib at no point intersects more than one outer rib groove.

In another preferred embodiment provision is made that a cross-section through both outer tread ribs of the tread strip always at most intersects one outer rib groove. This means that in circumferential regions in which an outer rib groove is present in one of the outer tread ribs the other outer tread rib is always formed without an outer rib groove.

A multiplicity of arrangements and runs of the outer rib grooves in the outer tread ribs is conceivable. In this respect attention should always be paid to the fact that the layout of the outer rib grooves must take place so that the water drainage ability and thus the wet behaviour is provided in the region of the outer tread ribs, but so that the noise insulating characteristics and also the self noise generation of the outer tread ribs is not unfavourably effected.

It has been found that the outer rib grooves can be built up both predominantly of groove sections which extend in a curve or also of predominantly straight groove sections which extend parallel to the circumferential grooves. Furthermore the outer rib grooves can have, at least section-wise, an arcuate or wavy-line shape in the circumferential direction.

The outer rib grooves are preferably disposed over the entire tread strip periphery with a spacing from the outer side margin of the tread strip, with the groove-free marginal section of the outer tread rib which is provided thereby counteracting noise emissions of the tyre.

The tread strip of the tyre can be built up of three or four tread ribs and the noise development of these two embodiments is approximately the same. Inner rib grooves can be provided in the inner tread ribs which in precisely the same way as the outer rib grooves of the outer tread ribs have a lesser width than the circumferential grooves and communicate with one or both of the circumferential grooves bounding the respective inner tread rib. The inner rib grooves can be formed as connection grooves between the outer rib grooves of the two outer tread ribs and be directed in alignment with the outer rib grooves in the two outer tread ribs, or can also continue in another manner in the inner tread ribs the groove pattern formed by the outer rib grooves in the outer tread ribs. Through the co-operation of the outer rib grooves and the inner rib grooves in the distribution and drainage of road water an effective drainage of the tread strip is favoured.

The noise emission of the tyre can be further reduced by circumferential grooves which have a snake-like or zigzag course, at least section-wise. A low frequency of oscillation of the snake-like shape or of the zigzag shape is more advantageous than a high frequency.

In addition to the circumferential grooves, the outer rib grooves and optionally the inner rib grooves which make up the predominant negative tread component of the tread strip, pattern ribs can also be provided in the tread strip, with the width of the ribs however being smaller than the breadth of the grooves.

Furthermore fine grooves or sipes can be present in the tread strip which increase the elasticity of the tread and thereby further reduce the rolling noises of the tyre.

Since it has been found in road tests that the wear is relatively large in the upper side edge regions of the tread ribs it is expedient to intentionally reduce the tread ribs in these edge regions at the stage of manufacture by cutting away the edge regions either on a curve or on a straight line in the axial cross-sectional plane of the tyre. In this way the tread ribs are more stable from the outset relative to axial loads. The tread ribs tilt less in the axial direction whereby the driving behaviour is improved.

Further advantageous embodiments of the invention are set forth in the subordinate claims.

The invention will now be explained by way of examples with reference to the drawings in which are shown:
Figures 1A and 1B are schematic illustrations of tyre treads in accordance with the invention;
Figures 2A to 2C schematic illustrations of tyre treads similar to Figure 1;
Figures 3A to 3D schematic illustrations of tyre treads in accordance with the invention, with the circumferential grooves being of snake-like shape or of serrated form;
Figure 4 shows a schematic illustration of another tyre tread in accordance with the invention, with the outer rib grooves communicating at one end with a circumferential groove;
Figures 5A and 5B schematic illustrations of embodiments similar to Figure 1A with special rib structure and sipe structure;
Figure 6 a schematic illustration of a cross-section through a three tread rib tyre in accordance with the invention with reduced axial side edge regions of the tread ribs; and
Figure 7 schematic illustrations of tyre treads in accordance with the invention with sections of arcuately shaped outer and inner rib grooves of different arc length.

Tread elements which correspond to one another are designated in the different figures of the drawings with the same reference numerals.

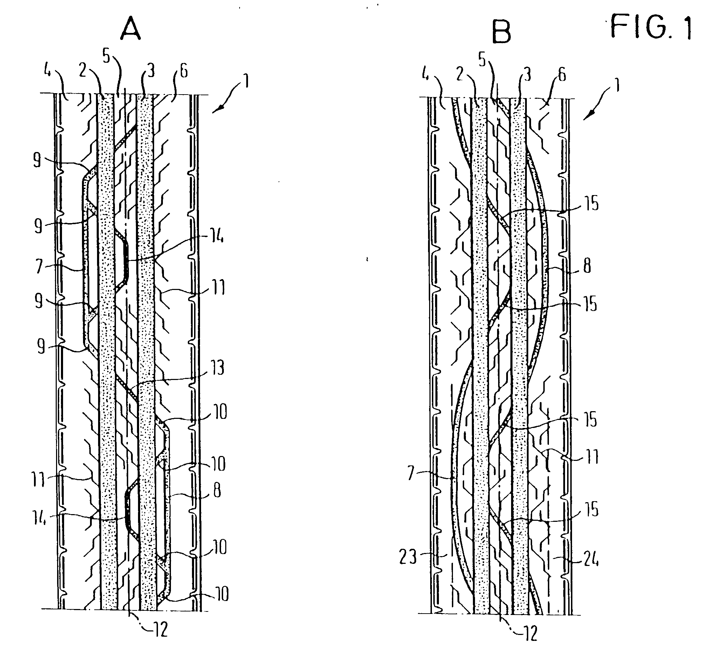

Figure 1A shows the pattern of a tread strip 1 which is built up from three tread ribs 4,5,6 which are separated from one another by two circumferential grooves 2 and 3. The outer tread ribs 4 and 6 are designated in the following as first and second outer tread ribs and the tread rib 5 lying between them as the inner tread rib.

Both outer tread ribs 4 and 6 are provided section-wise with first and second outer rib grooves 7 and 8 which extend predominantly parallel to the circumferential grooves 2,3 and which respectively communicate via first and second outer rib groove sections 9m and 10 with the latter. The width of the outer rib grooves 7,8 is thereby smaller than the width of the circumferential grooves 2,3 and the circumferential grooves 2,3 preferably also have a greater depth than the outer rib grooves 7,8.

Both the two outer tread ribs 4 and 6 and also the inner tread rib 5 are provided at least section-wise with fine grooves or sipes 11 which can have pretty much any desirable shape and which are arranged essentially obliquely to the centre line 12 of the tread strip in Figure 1A.

The outer rib grooves 7,8 have an alternating structure in the sense that they are present over the entire tread strip circumference either only in the first outer tread rib 4 or in the second outer tread rib 6 but however never in both outer tread ribs 4 and 6 together.

Inner rib grooves extend in the inner tread rib 5 and either extend as connection grooves 13 between the first and second outer rib grooves 7 and 8, and thereby intersect both circumferential grooves 2 and 3, or take the form of supplementary grooves 14 which continue the pattern of the outer rib grooves 7,8 in the inner tread rib 5 but do not produce any connection between the two circumferential grooves 2 and 3. Outer rib grooves 7,8 and inner rib grooves 13,14 can be made of different width.

Figure 1B shows a different tread strip pattern in accordance with the invention which is distinguished from the pattern shown in Figure 1A primarily in that the first and second outer rib grooves 7,8 are made curved or of arcuate shape and that a different fine groove pattern 11 is provided. In contrast all the grooves 15 provided in the inner tread rib 5 here always intersect both circumferential grooves 2 and 3 but are however only directed in alignment with the outer rib grooves 7,8 at their one end. Otherwise the outer rib grooves 7,8 of the outer tread ribs 4 and 6 are alternatingly arranged substantially in the manner already explained in Figure 1A.

Both examples shown in Figure 1 have the common feature that the individual outer rib grooves 7,8 extend substantially in the circumferential direction, are partitioned off relative to the edge of the tread strip and are formed so that they are distributed comparatively individually over the tread strip 1 in comparison to known treads which normally have rib-like grooves or grooves arranged grouped together in another manner. In this way a drainage of the outer tread ribs 4,6 is provided which is not achieved at the expense of increased noise development.

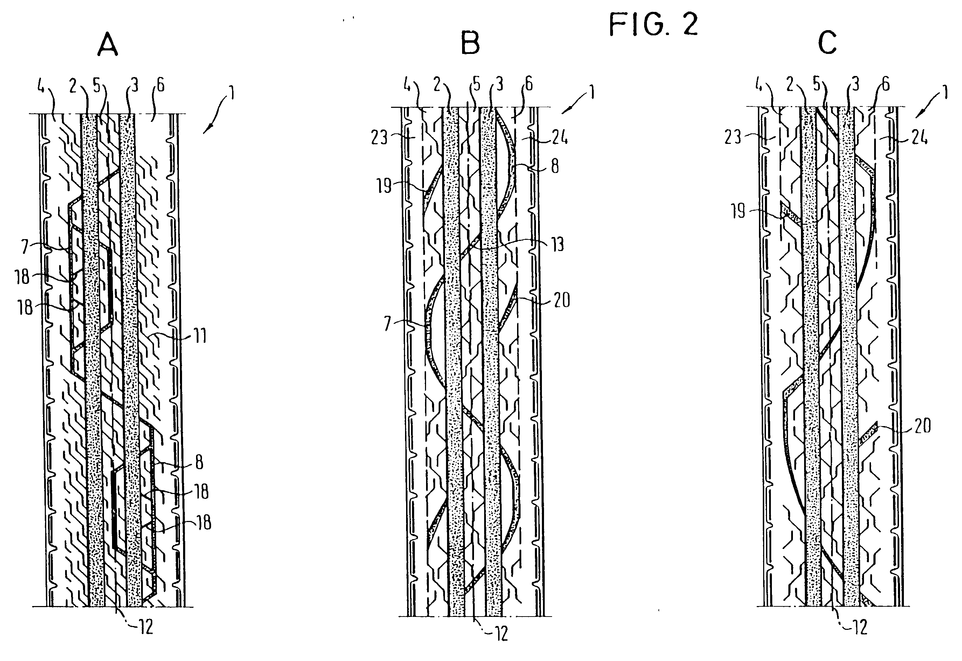

The Figures 2A,2B and 2C respectively show modifications of the tread strip patterns shown in Figures 1A,1B and 1C. In accordance with Figure 2A the outer rib grooves 7,8 of the pattern shown in Figure 1A can be made narrower with additional outer rib groove sections 18 then being provided to dewater the outer rib grooves 7 and 8 into the circumferential grooves 2 and 3. The fine grooves or sipes 11 extend continuously in the circumferential direction over all the tread ribs 4,5 and 6, i.e. in comparison with Figure 1A, in particular also in the outer tread rib sections through which the outer rib grooves 7,8 pass.

Figure 2B shows an oscillating course of the outer and inner rib grooves about the tread strip centre line 12, with inner rib grooves section 13 continuing the groove pattern formed by the first and second outer rib grooves 7 and 8 across the inner tread rib 5. Short outer rib groove continuations 19,20 are provided with respect to the tread strip centre line 12 in the illustrated manner lying opposite to the outer rib grooves 7,8.

The tread pattern shown in Figure 2C has outer rib grooves of the outer tread ribs 4 and 6 which change in width along their course and have also outer rib groove extensions 19,20 in similar manner to Figure 2B.

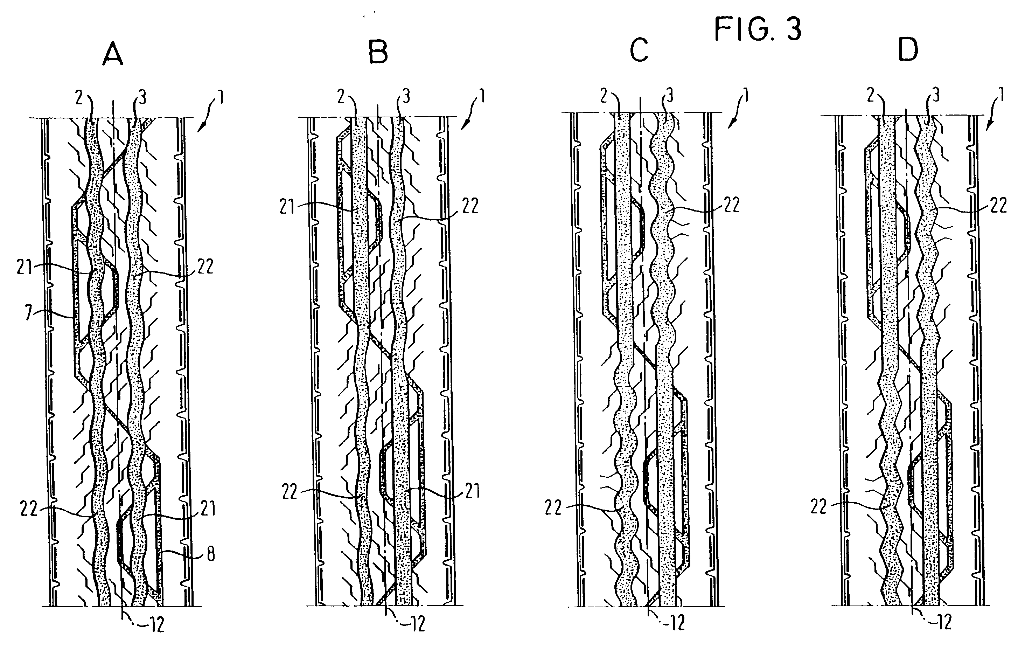

All previously illustrated embodiments have the common feature that the circumferential grooves 2 and 3 extend in a straight line. In Figures 3A, 3B, 3C and 3D changes of the profile shown in Figure 1A are illustrated in which the circumferential grooves 2,3 have a wavy-line shaped or zigzag-line shaped course, at least section-wise.

In detail a wavy-line shaped course of the circumferential groove is shown in Figure 3A with the wave periodicity of the circumferential groove sections 21 which extend adjacent to the outer rib grooves being higher than the periodicity of oppositely disposed circumferential groove sections 22 which bound outer tread rib regions through which outer rib grooves 7,8 do not pass.

Figure 3B is distinguished from Figure 3A only in that the circumferential groove sections 21 are of straight line shape, whereas the circumferential groove sections 22 have a wave-like shape in similar manner to Figure 3A. The circumferential groove sections 21 which are of straight-line shape can have a greater width than the wavy-line shaped sections 22.

Figure 3C is distinguished from Figure 3B by the periodicity of the wavy-line shaped circumferential groove sections 22 and also by a different design of the fine grooves.

In distinction to Figure 3C the circumferential groove sections 22 are made of zigzag-line shape in Figure 3D instead of wavy-line shape.

It has been shown in road tests that with a zigzagged or sinusiodally wave-shaped design of the circumferential grooves it is possible to obtain a noise reduction in comparison to the case of circumferential grooves of straight line shape. With the wavy-line shapes shown in Figure 3 an improvement of the so-called "pass-by noise" of about 0.5dB(A) was achieved. In this respect the somewhat smaller oscillation frequencies of the wavy lines shown in Figures 3A and 3B are preferred in relationship to the higher frequencies in Figures 3C and 3D.

Even when the circumferential grooves shown in Figure 3 always have a course which differs section-wise the circumferential grooves of the invention can also have a sinusoidal or zigzag shape which remains constant over the entire circumference.

All the embodiments shown in Figures 1, 2 and 3 have in common that the outer rib grooves 7 and 8 always extend at a distance from the edge of the tread strip. Accordingly, continuous outer rib marginal regions 23,24 are provided in the circumferential direction, which are indicated in Figures 1B, 1C, 2B and 2C by straight lines, and which serve to partition off rolling noises from the outside. The outer rib marginal regions 23,24 each have approximately half the width of the outer tread rib 4,6 but can however also be made smaller.

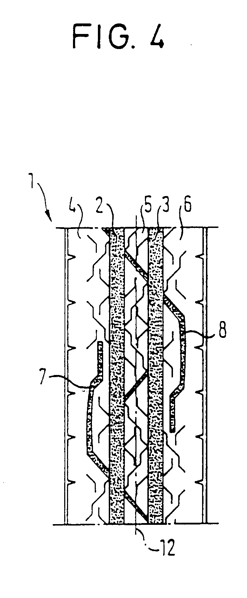

In accordance with Figure 4 outer rib grooves 7 and 8 are provided in a further embodiment of a tread strip pattern. They extend substantially in the circumferential direction, have a changing width and only communicate at their one end with the circumferential grooves 2 and 3.

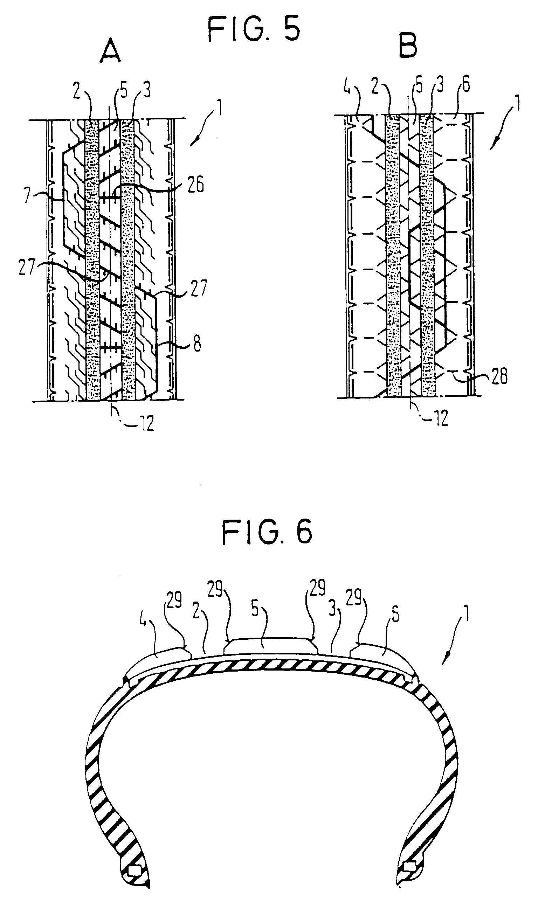

Figure 5A shows a further example of a tread pattern in accordance with the invention in which a relatively large number of inner rib grooves 26 which lie closely alongside one another are provided in the region of the inner tread rib 5. These inner rib grooves 26 connect with two circumferential grooves 2 and 3 in web-like manner and include an intersection angle with the centre line 12 of the tread strip which changes in the circumferential direction. It is furthermore illustrated that both these inner rib grooves 26 and also the outer rib grooves 7 and 8 provided in accordance with the invention can have short transverse groove extensions 27.

The tread strip 1 shown in figure 5B corresponds with respect to the tread pattern to the tread strip 1 shown in Figure 2A and is distinguished from the latter only in that a different fine groove pattern 28 is worked into the tread strip 1.

Furthermore, in all illustrated examples, other profile elements, such as ribs and the like with negative pattern components, whose width should however be less than the widths of the individual grooves 2,3,7,8,13,14,15,26 can also be provided in non-illustrated manner in addition to the circumferential grooves 2,3, the outer rib grooves 7,8 and the inner rib grooves 14,15 and 26. These additional negative profile components can improve the wet behaviour of the tyre, are however to be laid out so that they do not substantially contribute to increasing the rolling noises and thus do not unfavourably influence the comprise found with the invention between low noise generation and good wet behaviour.

Figure 6 shows a cross-section of a three tread rib tyre in accordance with the invention of which the running strip 1 has outer and inner tread ribs 4,6 and 5 respectively separated by circumferential grooves 2 and 3. Since the axial side edge regions 29 of the tread ribs 4,5,6 of such a tyre wear relatively quickly as a result of side forces it has proved to advantageous to make these edge regions curved or chamfered off in a straight line during manufacturing, which can for example take ply by subsequently cutting away material. The shape and extend of the material which is cut away are to be selected in dependence on the axial resilience of the tread ribs. The narrower the tread ribs are the less material is to be removed by cutting it away.

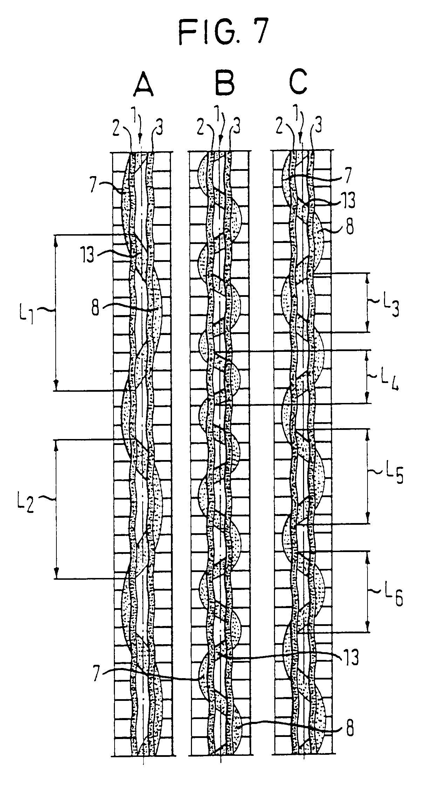

Further examples of tread strip patterns in accordance with the invention as shown in the Figures 7A, 7B and 7C. The outer rib grooves 7,8 have, in each case, the shape of an arcuate line in similar manner to Figure 1B and this is continued in the inner tread rib region by inner rib grooves 13 which are directed so they are in alignment therewith. In the illustrated examples the combined inner rib and outer rib groove runs 13,7,8 have three (Figure 7A), five (Figure 7C) and seven (Figure 7B) periods respectively over the entire circumference.

It is important that in each example the lengths of the individual waves, and thus the arc lengths of the outer rib grooves differ over the tyre circumference. In Figure 7A the outer rib groove 8 has, for example, the different arc lengths L₁ and L₂, whereas in the Figures 7B and 7C the outer rib groove 8 respectively has the arc lengths L₃ and L₄ or L₅ and L₆ which likewise differ from one another. In this way, the appearance of a specific uniform noise frequency is suppressed and a similar effect arises to that which is already known from the so-called "Pitch Arrangement" in conventional tread patterns.

Arc or wave lengths which change in the circumferential direction can not only be present in the outer and inner rib grooves - as shown in Figures 7A to 7C - but can also be realised in analogous manner and with a comparable action, with the oscillating circumferential grooves 2,3 illustrated in Figures 3A to 3D.

Furthermore, in addition to the three tread rib tyres illustrated in Figures 1 to 7, four tread rib tyres were also tested and it turned out that the favourable characteristics of the three tread rib tyres which can be achieved with the invention can also be achieved with four tread rib tyres built up in analogous manner. All of the tread strip examples shown in Figures 1 to 7 for three tread rib tyres can thus be transferred in suitable manner also to four tread rib tyres.

## Claims

1. A pneumatic tyre having a tread strip comprising a plurality of tread ribs separated in the axial direction by wide circumferential grooves, wherein outer rib grooves (7,8) are present in at least one of the outer tread ribs (4,6), with the outer rib grooves (7,8) having a width smaller than that of the circumferential grooves (2,3), characterised in that the outer rib grooves (7,8) are circumferentially discontinuous and communicate directly with the circumferential groove (2,3) bounding the corresponding outer tread rib (4,6) and the outer rib grooves (7,8) have an alternating configuration such that they are present in different outer ribs (4,6) over the entire tread strip circumference, and in that the outer rib grooves (7,8) are partitioned off from the outer edges of the tread (1) by a groove-free, outer rib margin (23,24) extending continuously around the circumference.

2. A pneumatic tyre in accordance with one of the preceding claims, characterised in that the outer rib grooves (7,8) are formed predominantly from groove sections extending substantially in the circumferential direction.

3. A pneumatic tyre in accordance with one of the preceding claims, characterised in that a cross-section at any point through an outer tread rib (4,6) does not intersect more than one outer rib groove (7,8).

4. A pneumatic tyre in accordance with one of the preceding claims, characterised in that a cross-section at any point through both outer tread ribs (4,6) does not intersect more than one outer rib groove (7,8).

5. A pneumatic tyre in accordance with one of the preceding claims, characterised in that the outer rib grooves (7,8) are predominantly formed of curved or winding groove sections.

6. A pneumatic tyre in accordance with one of the claims 1 to 6, characterised in that the outer rib grooves (7,8) predominantly comprise groove sections extending parallel to the circumferential grooves (2,3).

7. A pneumatic tyre in accordance with one of the preceding claims, characterised in that the outer rib grooves (7,8) have an arcuate line shape or a snake-like shape, at least section-wise in the circumferential direction.

8. A pneumatic tyre in accordance with one of the preceding claims, characterised in that the outer rib grooves (7,8) have an angled or serrated shape at least section-wise.

9. A pneumatic tyre in accordance with one of the preceding claims, characterised in that the outer rib grooves (7,8) have a width which changes along their course.

10. A pneumatic tyre in accordance with one of the preceding claims, characterised in that the outer rib grooves (7,8) do not possess any groove sections extending the axial directions.

11. A pneumatic tyre in accordance with any of the preceding claims, characterised in that the outer rib margin (23,24) has at the most half the width of the outer tread rib (4,6).

12. A pneumatic tyre in accordance with one of the preceding claims, characterised in that the tread (1) is built up of three (4,5,6) or four tread ribs.

13. A pneumatic tyre in accordance with one of the preceding claims, characterised in that the width of the outer tread ribs (4,6) is larger than the width of the inner tread rib or ribs (5) lying between the outer tread ribs (4,6).

14. A pneumatic tyre in accordance with one of the preceding claims, characterised in that, in the inner tread rib or ribs (5), inner rib grooves (13,14,15,26) are provided which have a smaller width than the circumferential grooves (2,3); and in that the inner rib grooves (13,14,15,26) communicate with at least one circumferential groove (2,3) bounding the respective inner tread rib (5).

15. A pneumatic tyre in accordance with claim 14, characterised in that the inner rib grooves (13,14,16,26) communicate with the two circumferential grooves (2,3) bounding the respective inner tread rib (5).

16. A pneumatic tyre in accordance with claim 14 to 15, characterised in that the groove pattern formed in the outer tread ribs (4,6) by the outer rib grooves (7,8) is continued in the inner tread ribs (5) by the inner rib grooves (13,14,15).

17. A pneumatic tyre in accordance with one of the claims 14 to 16, characterised in that at least some of the inner rib grooves (13) connect outer rib grooves (7,8) of both outer tread ribs (4,6) to one another.

18. A pneumatic tyre in accordance with one of the preceding claims, characterized in that the circumferential grooves (2,3) have a straight course.

19. A pneumatic tyre in accordance with claims 1 to 17, characterised in that the circumferential grooves (2,3) have a snake-like shape or zigzag shape at least section-wise (21,22).

20. A pneumatic tyre in accordance with one of the preceding claims, characterised in that the outer rib grooves (7,8) and/or the inner rib grooves (13) and/or the circumferential grooves (2,3) which are formed at least section-wise with an arcuate, snake-like or zigzag shape have arc, loop or zigzag lengths (L₁,L₂;L₃,L₄,L₅;L₆) which vary along their extent in the circumferential direction.

21. A pneumatic tyre in accordance with one of the preceding claims, characterised in that the tread ribs (4,5,6) are reduced in their axial side edge regions (29) by a curved or straight chamfer.

22. A pneumatic tyre in accordance with one of the preceding claims, characterised in that the circumferential grooves (2,3) are formed deeper than the outer rib grooves (7,8) and, optionally than the inner rib grooves (13,14,15,26).

23. A pneumatic tyre in accordance with one of the preceding claims, characterised in that a supplementary profiling of the tread present in addition to the circumferential grooves, outer rib grooves and, optionally, inner rib grooves (2,3;7,8;13, 14,15,26) includes profile ribs whose widths are made smaller than the widths of the grooves (2,3;7,8;13.14.15.26).

24. A pneumatic tyre in accordance with one of the preceding claims, characterised in that fine grooves or sipes (11,28) are provided in the tread (1).

25. A pneumatic tyre in accordance with claim 24, characterised in that the fine grooves or sipes (11) are arranged in a wave or zigzag pattern oriented inclined to the circumferential direction.

26. A pneumatic tyre in accordance with on of the preceding claims, characterised in that the outer rib grooves (7,8) extending substantially in the axial direction are arranged with a separation which varies in the circumferential direction.

27. A pneumatic tyre in accordance with one of the preceding claims, characterised in that the inner rib grooves (30) which originate alternatingly in the circumferential direction from one of the two circumferential grooves (2,3) each extend beyond the centreline (12) of the tread.

## Patentansprüche

1. Luftreifen mit einem Laufflächenstreifen, der mehrere Laufflächenrippen umfaßt, die in der Axialrichtung durch breite Umfangsrillen getrennt sind, wobei äußere Rippenrillen (7, 8) in mindestens einer der äußeren Laufflächenrippen (4, 6) vorhanden sind, wobei die äußeren Rippenrillen (7, 8) eine Breite aufweisen, die kleiner als diejenige der Umfangsrillen (2, 3) ist, dadurch gekennzeichnet, daß die äußeren Rippenrillen (7, 8) in Umfangsrichtung nicht fortlaufend sind und direkt mit der Umfangsrille (2, 3), welche die entsprechende äußere Laufflächenrippe (4, 6) begrenzt, in Verbindung stehen, und die äußeren Rippenrillen (7, 8) eine abwechselnde Ausgestaltung aufweisen, so daß sie in unterschiedlichen äußeren Rippen (4, 6) über den gesamten Laufflächenstreifenumfang vorhanden sind, und dadurch, daß die äußeren Rippenrillen (7, 8) von den Außenkanten der Lauffläche (1) durch einen rillenfreien, äußeren Rippenrand (23, 24) abgetrennt sind, der sich fortlaufend um den Umfang herum erstreckt.

2. Luftreifen nach einem der vorhergehenden Ansprüche, dadurch gekennzeichnet, daß die äußeren Rippenrillen (7, 8) vorwiegend aus Rillenabschnitten gebildet sind, die sich im wesentlichen in der Umfangsrichtung erstrecken.

3. Luftreifen nach einem der vorhergehenden Ansprüche, dadurch gekennzeichnet, daß ein Querschnitt an irgendeinem Punkt durch eine äußere Laufflächenrippe (4, 6) nicht mehr als eine äußere Rippenrille (7, 8) schneidet.

4. Luftreifen nach einem der vorhergehenden Ansprüche, dadurch gekennzeichnet, daß ein Querschnitt an irgendeinem Punkt durch beide äußere Laufflächenrippen (4, 6) nicht mehr als eine äußere Rippenrille (7, 8) schneidet.

5. Luftreifen nach einem der vorhergehenden Ansprüche, dadurch gekennzeichnet, daß die äußeren Rippenrillen (7, 8) vorwiegend aus gekrümmten oder gewundenen Rillenabschnitten gebildet sind.

6. Luftreifen nach einem der Ansprüche 1 bis 6, dadurch gekennzeichnet, daß die äußeren Rippenrillen (7, 8) vorwiegend Rillenabschnitte umfassen, die sich parallel zu den Umfangsrillen (2, 3) erstrecken.

7. Luftreifen nach einem der vorhergehenden Ansprüche, dadurch gekennzeichnet, daß die äußeren Rippenrillen (7, 8) mindestens abschnittsweise in der Umfangsrichtung eine Form einer gebogenen Linie oder eine schlangenartige Form aufweisen.

8. Luftreifen nach einem der vorhergehenden Ansprüche, dadurch gekennzeichnet, daß die äußeren Rippenrillen (7, 8) mindestens abschnittsweise eine winklige oder gezackte Form aufweisen.

9. Luftreifen nach einem der vorhergehenden Ansprüche, dadurch gekennzeichnet, daß die äußeren Rippenrillen (7, 8) eine Breite aufweisen, die sich entlang ihres Verlaufes ändert.

10. Luftreifen nach einem der vorhergehenden Ansprüche, dadurch gekennzeichnet, daß die äußeren Rippenrillen (7, 8) keine Rillenabschnitte besitzen, die sich in den axialen Richtungen erstrecken.

11. Luftreifen nach einem der vorhergehenden Ansprüche, dadurch gekennzeichnet, daß der äußere Rippenrand (23, 24) höchstens die halbe Breite der äußeren Laufflächenrippen (4, 6) aufweist.

12. Luftreifen nach einem der vorhergehenden Ansprüche, dadurch gekennzeichnet, daß die Lauffläche (1) aus drei (4, 5, 6) oder vier Laufflächenrippen aufgebaut ist.

13. Luftreifen nach einem der vorhergehenden Ansprüche, dadurch gekennzeichnet, daß die Breite der äußeren Laufflächenrippen (4, 6) größer als die Breite der zwischen den äußeren Laufflächenrippen (4, 6) liegenden inneren Laufflächenrippe oder -rippen (5) ist.

14. Luftreifen nach einem der vorhergehenden Ansprüche, dadurch gekennzeichnet, daß in der inneren Laufflächenrippe oder -rippen (5) innere Rippenrillen (13, 14, 15, 26) vorgesehen sind, die eine kleinere Breite als die Umfangsrillen (2, 3) aufweisen, und dadurch, daß die inneren Rippenrillen (13, 14, 15, 26) mit mindestens einer Umfangsrille (2, 3) in Verbindung stehen, welche die jeweilige innere Laufflächenrippe (5) begrenzt.

15. Luftreifen nach Anspruch 14, dadurch gekennzeichnet, daß die inneren Rippenrillen (13, 14, 16, 26) mit den beiden Umfangsrillen (2, 3) in Verbindung stehen, die die jeweilige innere Laufflächenrippe (5) begrenzen.

16. Luftreifen nach Anspruch 14 bis 15, dadurch gekennzeichnet, daß das Rillenprofil, das in den äußeren Laufflächenrippen (4, 6) durch die äußeren Rippenrillen (7, 8) gebildet ist, in den inneren Laufflächenrippen (5) durch die inneren Rippenrillen (13, 14, 15) fortgesetzt ist.

17. Luftreifen nach einem der Ansprüche 14 bis 16, dadurch gekennzeichnet, daß mindestens manche der inneren Rippenrillen (13) äußere Rippenrillen (7, 8) von beiden äußeren Laufflächenrippen (4, 6) miteinander verbinden.

18. Luftreifen nach einem der vorhergehenden Ansprüche, dadurch gekennzeichnet, daß die Umfangsrillen (2, 3) einen geraden Verlauf aufweisen.

19. Luftreifen nach den Ansprüchen 1 bis 17, dadurch gekennzeichnet, daß die Umfangsrillen (2, 3) mindestens abschnittsweise eine schlangenartige Form oder eine Zickzack-Form (21, 22) aufweisen.

20. Luftreifen nach einem der vorhergehenden Ansprüche, dadurch gekennzeichnet, daß die äußeren Rippenrillen (7, 8) und/oder die inneren Rippenrillen (13) und/oder die Umfangsrillen (2, 3), die mindestens abschnittsweise mit einer gebogenen, schlangenartigen oder Zickzack-Form ausgebildet sind, gebogene, Schleifen- oder Zickzack-Längen (L₁, L₂; L₃, L₄, L₅; L₆) aufweisen, die entlang ihrer Ausdehnung in der Umfangsrichtung schwanken.

21. Luftreifen nach einem der vorhergehenden Ansprüche, dadurch gekennzeichnet, daß die Laufflächenrippen (4, 5, 6) in den Bereichen ihrer axialen Seitenkanten (29) durch eine gekrümmte oder gerade Fase reduziert sind.

22. Luftreifen nach einem der vorhergehenden Ansprüche, dadurch gekennzeichnet, daß die Umfangsrillen (2, 3) tiefer als die äußeren Rippenrillen (7, 8) und wahlweise als die inneren Rippenrillen (13, 14, 15, 26) ausgebildet sind.

23. Luftreifen nach einem der vorhergehenden Ansprüche, dadurch gekennzeichnet, daß eine zusätzliche Profilierung der Lauffläche, die zusätzlich zu den Umfangsrillen, den äußeren Rippenrillen und wahlweise den inneren Rippenrillen (2, 3; 7, 8; 13, 14, 15, 26) vorhanden ist, Profilrippen umfaßt, deren Breiten kleiner als die Breiten der Rillen (2, 3; 7, 8; 13. 14. 15. 26) hergestellt sind.

24. Luftreifen nach einem der vorhergehenden Ansprüche, dadurch gekennzeichnet, daß in der Lauffläche (1) dünne Rillen oder Einschnitte (11, 28) vorgesehen sind.

25. Luftreifen nach Anspruch 24, dadurch gekennzeichnet, daß die dünnen Rillen oder Einschnitte (11) in einem Wellen- oder Zickzack-Muster angeordnet sind, das zur Umfangsrichtung schräg orientiert ist.

26. Luftreifen nach einem der vorhergehenden Ansprüche, dadurch gekennzeichnet, daß die äußeren Rippenrillen (7, 8), die sich im wesentlichen in der Axialrichtung erstrecken, mit einem Abstand angeordnet sind, der in der Umfangsrichtung schwankt.

27. Luftreifen nach einem der vorhergehenden Ansprüche, dadurch gekennzeichnet, daß die inneren Rippenrillen (30), die abwechselnd in der Umfangsrichtung von einer der beiden Umfangsrillen (2, 3) ausgehen, sich jeweils über die Mittellinie (12) der Lauffläche hinaus erstrecken.

## Revendications

1. Pneumatique possédant une nappe de bande de roulement qui comprend plusieurs nervures de bande de roulement séparées dans la direction axiale par de larges gorges circonférentielles, dans lequel des gorges (7, 8) de nervure externe sont présentes dans l'une au moins des nervures externes (4, 6) de la bande de roulement, les gorges (7, 8) de nervure externe ayant une largeur inférieure à celle des gorges circonférentielles (2, 3), caractérisé en ce que les gorges (7, 8) de nervure externe sont discontinues en direction circonférentielle et communiquent directement avec la gorge circonférentielle (2, 3) qui délimite la nervure externe correspondante (4, 6) de la bande de roulement, et les gorges (7, 8) de nervure externe ont une configuration qui alterne afin qu'elles soient présentes dans des nervures externes différentes (4, 6) sur toute la circonférence de la nappe de bande de roulement, et en ce que les gorges (7, 8) de nervure externe sont séparées du bord externe de la bande de roulement (1) par une marge (23, 24) de nervure externe sans gorge qui s'étend de façon continue à la circonférence.

2. Pneumatique selon l'une des revendications précédentes, caractérisé en ce que les gorges (7, 8) de nervure externe sont formées essentiellement à partir de tronçons de gorge qui s'étendent pratiquement dans la direction circonférentielle.

3. Pneumatique selon l'une des revendications précédentes, caractérisé en ce qu'une section en un point quelconque d'une nervure externe (4, 6) de bande de roulement ne recoupe pas plus d'une gorge de nervure externe (7, 8).

4. Pneumatique selon l'une quelconque des revendications précédentes, caractérisé en ce qu'une section en un point quelconque des deux nervures externes (4, 6) de bande de roulement ne recoupe pas plus d'une seule gorge (7, 8) de nervure externe.

5. Pneumatique selon l'une des revendications précédentes, caractérisé en ce que les gorges (7, 8) de nervure externe sont essentiellement formées de tronçons de gorge courbes ou sinueux.

6. Pneumatique selon l'une des revendications 1 à 6, caractérisé en ce que les gorges (7, 8) de nervure externe comportent essentiellement des tronçons de gorge qui s'étendent parallèlement aux gorges circonférentielles (2, 3).

7. Pneumatique selon l'une des revendications précédentes, caractérisé en ce que les gorges (7, 8) de nervure externe ont une forme de ligne courbe ou de ligne sinueuse, au moins en coupe en direction circonférentielle.

8. Pneumatique selon l'une des revendications précédentes, caractérisé en ce que les gorges (7, 8) de nervure externe ont une forme inclinée ou crénelée au moins en coupe.

9. Pneumatique selon l'une des revendications précédentes, caractérisé en ce que les gorges (7, 8) de nervure externe ont une largeur qui change suivant leur trajet.

10. Pneumatique selon l'une des revendications précédentes, caractérisé en ce que les gorges (7, 8) des nervures externes ne possèdent aucun tronçon de gorge qui s'étend en direction axiale.

11. Pneumatique selon l'une quelconque des revendications précédentes, caractérisé en ce que la marge (23, 24) de nervure externe a au plus la moitié de la largeur de la nervure externe (4, 6) de bande de roulement.

12. Pneumatique selon l'une des revendications précédentes, caractérisé en ce que la bande de roulement (1) est confectionnée avec trois (4, 5, 6) ou quatre nervures de bande de roulement.

13. Pneumatique selon l'une des revendications précédentes, caractérisé en ce que la largeur des nervures externes (4, 6) de la bande de roulement est supérieure à la largeur de la nervure ou des nervures internes (5) de bande de roulement placées entre les nervures externes (4, 6) de bande de roulement.

14. Pneumatique selon l'une des revendications précédentes, caractérisé en ce que, dans la nervure ou les nervures internes de bande de roulement (5), des gorges (13, 14, 15, 26) de nervure interne sont réalisées avec une largeur inférieure à celle des gorges circonférentielles (2, 3), et en ce que les gorges (13, 14, 15, 26) de nervure interne communiquent avec au moins une gorge circonférentielle (2, 3) délimitant la nervure interne respective (5) de bande de roulement.

15. Pneumatique selon la revendication 14, caractérisé en ce que les gorges (13, 14, 16, 26) de nervure interne communiquent avec les deux gorges circonférentielles (2, 3) délimitant la nervure interne respective (5) de bande de roulement.

16. Pneumatique selon la revendication 14 ou 15, caractérisé en ce que le dessin des gorges formées dans les nervures externes (4, 6) de la bande de roulement par les gorges (7, 8) de nervure externe se prolonge dans les nervures internes (5) de bande de roulement par les gorges (13, 14, 15) de nervure interne.

17. Pneumatique selon l'une des revendications 14 à 16, caractérisé en ce que certaines au moins des gorges (13) de nervure interne raccordent les gorges (7, 8) de nervure externe des deux nervures externes (4, 6) de la bande de roulement l'une à l'autre.

18. Pneumatique selon l'une des revendications précédentes, caractérisé en ce que les gorges circonférentielles (2, 3) forment un trajet rectiligne.

19. Pneumatique selon les revendications 1 à 17, caractérisé en ce que les gorges circonférentielles (2, 3) ont en coupe une forme sinueuse ou en Zigzag au moins (21, 22).

20. Pneumatique selon l'une des revendications précédentes, caractérisé en ce que les gorges (7, 8) de nervure externe et/ou les gorges (13) de nervure interne et/ou les gorges circonférentielles (2, 3) qui sont formées au moins en coupe avec une forme courbe, sinueuse ou en zigzag ont des tronçons d'arc, de boucle ou de zigzag (L₁, L₂ ; L₃, L₄, L₅ ; L₆) qui varient suivant leur étendue en direction circonférentielle.

21. Pneumatique selon l'une des revendications précédentes, caractérisé en ce que les nervures (4, 5, 6) de bande de roulement ont des régions de bord latéral axial (29) réduites par un chanfrein courbe ou rectiligne.

22. Pneumatique selon l'une des revendications précédentes, caractérisé en ce que les gorges circonférentielles (2, 3) sont formées avec une plus grande profondeur que les gorges (7, 8) de nervure externe, et éventuellement que les gorges (13, 14, 15, 26) de nervure interne.

23. Pneumatique selon l'une des revendications précédentes, caractérisé en ce qu'un profilage supplémentaire de la bande de roulement, en plus des gorges circonférentielles, des gorges de nervure externe et éventuellement des gorges (2, 3 ; 7, 8 ; 13, 14, 15, 26) de nervure interne, comprend des nervures de profilage dont les largeurs sont inférieures aux largeurs desdites gorges (2, 3 ; 7, 8 ; 13, 14, 15, 26).

24. Pneumatique selon l'une des revendications précédentes, caractérisé en ce que de fines gorges ou fentes (11, 28) sont formées dans la bande de roulement (1).

25. Pneumatique selon la revendication 24, caractérisé en ce que les fines gorges ou fentes (11) sont disposées avec un dessin ondulé ou en zigzag orienté en direction inclinée par rapport à la direction circonférentielle.

26. Pneumatique selon l'une des revendications précédentes, caractérisé en ce que les gorges (7, 8) de nervure externe s'étendant pratiquement en direction axiale sont disposées avec une séparation qui varie en direction circonférentielle.

27. Pneumatique selon l'une des revendications précédentes, caractérisé en ce que les gorges (30) de nervure interne qui partent en alternance en direction circonférentielle de l'une des deux gorges circonférentielles (2, 3) s'étendent chacune au-delà de l'axe central (12) de la bande de roulement.
